# EUROPEAN PATENT SPECIFICATION

(11) **EP 2 165 921 B1**
(45) Date of publication and mention of the grant of the patent: **12.08.2015**
(21) Application number: 09015081.4
(22) Date of filing: 03.09.2007
(51) Int. Cl.: B62J 35/00, B62J 23/00

(54) **A fuel tank assembly for a motorcycle and a motorcycle equipped with such a fuel tank assembly**
Kraftstofftankanordnung für ein Motorrad und mit einer solchen Tankanordnung ausgestattetes Motorrad
Ensemble de réservoir de carburant pour motocyclette et motocyclette équipée d'un tel ensemble de réservoir de carburant

(43) Date of publication of application: 24.03.2010
(62) Divisional of application: 07017224.2
(73) Proprietor: Yamaha Motor Research & Development Europe s.r.l., 20050 Gerno di Lesmo (MI) (IT)
(72) Inventor: Tishiharu, Shigeta, 20148 Milano (IT); Locati, Claudio, 20043 Arcore (MI) (IT)
(74) Representative: Grünecker Patent- und Rechtsanwälte PartG mbB

(56) References cited:
- JP-A- 10 181 658
- US-A- 3 944 009
- US-A- 5 884 380
- US-A- 6 105 701

## Description

The present invention relates to a fuel motorcycle comprising a fuel tank assembly. A motorcycle having a fuel tank assembly according to the preamble of claim 1 is known from the document JP 10181658.

As it is well known in the automotive field, motorcycles are usually equipped with a fuel pump, the purpose of which is that of collecting fuel from the fuel tank and delivering the collected fuel to the injection system of the motorcycle. This in particular applies to usual motorcycles, such as for example two-wheeled motorbikes and/or other three or four-wheeled motorcycles, such as choppers, quads, or the like. To this end, the fuel pumps usually used, comprise a collecting portion adapted to collect fuel from the fuel tank, along with a delivering portion adapted to deliver the collected fuel to the injection system of the motorcycle. Moreover, at least a fuel pipe is provided, extending from said delivering portion of the fuel tank to said injection system of the motorcycle. The collecting portion of the fuel pump is usually located inside the fuel tank, whilst the delivering portion and the fuel pipe extending therefrom are usually placed outside the fuel tank. However, finding a convenient location for the delivering portion of the fuel pump and the fuel pipe extending therefrom has revealed to be a difficult task; in particular, this is due to the fact that the location of the delivering portion of the fuel pump not only influences the overall layout of the motorcycle, but also the performances of the fuel pump, which strongly depend on the location of the delivering portion. With respect to the overall layout and design of the motorcycle, it has furthermore to be noted that once a convenient location for the delivering portion of the fuel pump has been found, a corresponding convenient location for the fuel pipe has also to be found; this however, may become quite difficult when the delivering portion of the fuel pump is placed far away from the injection system of the motorcycle. In fact, with the injection system and the delivering portion of the fuel pump being disposed far away from each other, the length of the fuel pipe may become relevant, so that it may become difficult to find a convenient path and/or location for the fuel pipe. Moreover, it has to be avoided that the fuel pipe gets disconnected from the fuel pump and/or the injection system during use of the motorcycle, due to vibrations or the like. Accordingly, corresponding fixation means have to be provided. Finding a corresponding adequate location for said fixation means may also reveal to be difficult and/or troublesome. It has, moreover, to be noted that motorcycles usually comprise covering elements mounted to the motorcycle for improving both the aerodynamics and the overall appearance or design of the motorcycle. In particular, these covering elements in some cases are provided to cover or protect mechanical components of the motorcycle such as, for instance, the engine, but also to cover or protect at least partially the fuel tank of the motorcycle. With a fuel pump situated far away from the injection system, and assuming that also fixation means are provided to avoid displacements of the fuel pipe during use, it may become troublesome to mount said covering elements to the motor vehicle since enough place has to be left under said covering elements for said fuel pipe and said fixation means. In turn, to provide enough place under said covering elements for one or both of said fuel pipe and said fixation means may require using big or cumbersome covering elements, resulting in the overall appearance of the motorcycle being negatively affected. It has also to be noted that at least an electrical cable has to be provided for supplying electrical power to the fuel pump, with the length of said electrical cable also depending on the position of the fuel pump. If also the length of said electrical cable becomes relevant, it may also become difficult to find or provide enough place for said electrical cable under said covering means. In terms of performance of the fuel pump and the injection system, in combination, it has to be noted that the pressure of the fuel along the fuel pipe depends on the length of the fuel pipe and decreases from a maximum value in proximity of the fuel pump and along side fuel pipe. Accordingly, it may come out that, in the case of a fuel pipe of a relevant length, the pressure of the fuel in proximity of the injection system decreases to a value under the minimum value required for the correct functioning of the injection system. Finally, it has to be noted that placing the fuel pump far away from the injection system may pose serious problems during maintenance of the motorcycle, since it may become difficult to gain access to said pump or to the fuel pipe extending therefrom.

In an attempt to meet as many as possible of the criteria and/or requirements outlined above, several solutions have been proposed in recent years by the manufacturers of motorcycles. In particular, according to the most common solutions as proposed by the manufacturers of motorcycles, the fuel pump is located as close as possible to the injection system. However, even if, on the one hand, placing the fuel pump close to the injection system allows to overcome or at least to minimize at least some of the problems described above, on the other hand, other problems arise in the case of such a layout, as it will become more apparent from the following disclosure.

According to one of the most common layouts proposed by the motorcycle manufacturers during the last years, the fuel pump or at least the collecting portion thereof is located below the fuel tank; in particular, in some cases, said delivering portion is mounted to the bottom wall of the fuel tank. In more detail, said delivering portion is screwed on a corresponding aperture formed in the bottom wall of the fuel tank. However, other component parts of the motorcycle, such as for instance, the injection system or at least the air filter thereof are also located below the fuel tank. Accordingly, the assembling operations might become troublesome and/or difficult, resulting in the time required for the assembly operations being unduly elongated and the corresponding costs being unduly increased. Moreover, when the need arises to remove the fuel pump from the fuel tank, for instance during maintenance or due to damages to the fuel pump, difficulties and/or problems may arise due to the lack of space left at the disposal of the operator. In the same way, when a new pump needs to be mounted to the bottom wall of the fuel tank, or even when the original pump, once it has been repaired, has to be mounted again to the fuel tank, the same problems may arise, due to lack of space. Very often, in the case of this layout, the fuel pump may be removed from or mounted to the fuel tank only after other components located below the fuel tank have been removed. Finally, it has to be noted that, in the case of this layout, namely in the case of a fuel pump being mounted to the bottom wall of the fuel tank, only fuel tanks made of steel or similar metals may be used; in fact, only in the case of tanks made of steel fuel leakages between the fuel pump and the corresponding aperture formed in the bottom wall of the fuel tank may be avoided. On the contrary, for instance in the case of fuel tanks made of plastic, these leakages of fuel may not be avoided, due to the fact that the dimensions of the plastic fuel tank may vary depending on the external conditions, in particular on the external temperature. However, for some applications, plastic fuel tanks may be preferred due to their low costs.

Therefore, it results from the above that in spite of all the efforts made, the solutions proposed in the past and known in the prior art do not meet all the essential requirements which have to be taken into consideration during the design of a motorcycle. In particular, the proposed solutions do not meet the need of a fuel tank assembly wherein the fuel pump is located at a convenient position allowing to offer good performance in terms of functionality and easy assembly and/or maintenance, as well as in terms of the overall look and appearance of the motorcycle.

Accordingly, in view of the above, it is an object of the present invention to provide a fuel tank assembly for a motorcycle, with said assembly comprising a fuel tank and a fuel pump, wherein said fuel pump is located at a position with respect to the fuel tank such as to offer adequate performance in terms of functionality, easy assembly and maintenance, but without negatively affecting other important criteria and/or requirements, such as, for instance the overall dimensions and/or the external look of the motorcycle.

In general terms, the present invention is based on the consideration that the problems affecting the prior art layouts relating to the fuel tank assembly may be overcome by mounting the fuel pump or at least the delivering portion thereof on the top of the fuel tank, in particular on the top wall of the fuel tank. A further consideration on which the present invention is based relates to the fact that, when this layout is selected, in particular when this location for the fuel pump or at least the delivering portion thereof is selected, also the fuel pipe may be conveniently arranged, in spite of its increased length due to the increased distance between the fuel pump or at least the delivering portion thereof and the injection system of the motorcycle. A further consideration on which the present invention is based relates to the fact that, by opportunely arranging at least the fuel pipe with respect to the fuel tank or at least by opportunely fixing at least said fuel pipe to the fuel tank, adequate covering means may be mounted on at least said fuel tank without negatively affecting the overall dimensions and look of the motorcycle.

On the basis of the considerations as stated above, the above mentioned problems posed are overcome by the features stated in independent claim 1.

Preferred embodiments of the present invention are laid down in the dependent claims. Further preferred embodiments of the present invention are disclosed in the following.

Further advantages, objectives, features as well as further embodiments of the present invention are defined in the appended claims and will become more apparent with the following detailed description when taken with reference to the accompanying drawings, in which identical or corresponding parts are identified by the same reference numerals. In particular, in the drawings:
Figure 1 relates to a schematic side view of a motorcycle adapted to be equipped with a fuel tank assembly according to the present invention;
Figure 2 relates to a schematic side cross-sectional view of a fuel tank assembly according to a first embodiment of the present invention;
Figure 3A relates to an enlarged view of the fuel tank assembly according to the first embodiment of the present invention depicted in Figure 2;
Figure 3B relates to a schematic top view of the fuel tank assembly according to the embodiment of the present invention depicted in Figures 2 and 3A;
Figure 3C relates to an enlarged view of further features of the fuel tank assembly according to the embodiment of the present invention depicted in Figures 3A and 3B;
Figure 4 relates to an enlarged view of a cover belonging to a further embodiment of the fuel tank assembly according to the present invention;
Figure 5A relates to an enlarged view of a further embodiment of the fuel tank assembly according to the present invention comprising the cover depicted in Figure 4;
Figure 5B relates to a schematic side cross-sectional view of the further embodiment of the fuel tank assembly according to the present invention depicted in Figure 5A and comprising the cover depicted in Figure 4;
Figure 6 relates to an enlarged view of a further embodiment of the cover depicted in Figure 4 and belonging to a further embodiment of the fuel tank assembly according to the present invention.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather the described illustrative embodiments merely exemplify the various aspects and features of the present invention, the scope of which is defined by the appended claims.

The present invention is understood to be of particular advantage when applied to two-wheeled motorcycles, such as, for instance, motorbikes. For this reason, examples will be given in the following, in which corresponding embodiments of the fuel tank assembly according to the present invention are applied to motorbikes. However, it has to be noted that the applications of the fuel tank assembly according to the present invention are not limited to the case of motorbikes. On the contrary, the fuel tank assembly according to the present invention may also be applied to other motorcycles, in particular to three or even four-wheeled motorcycles such as for instance, choppers, quads, or the like.

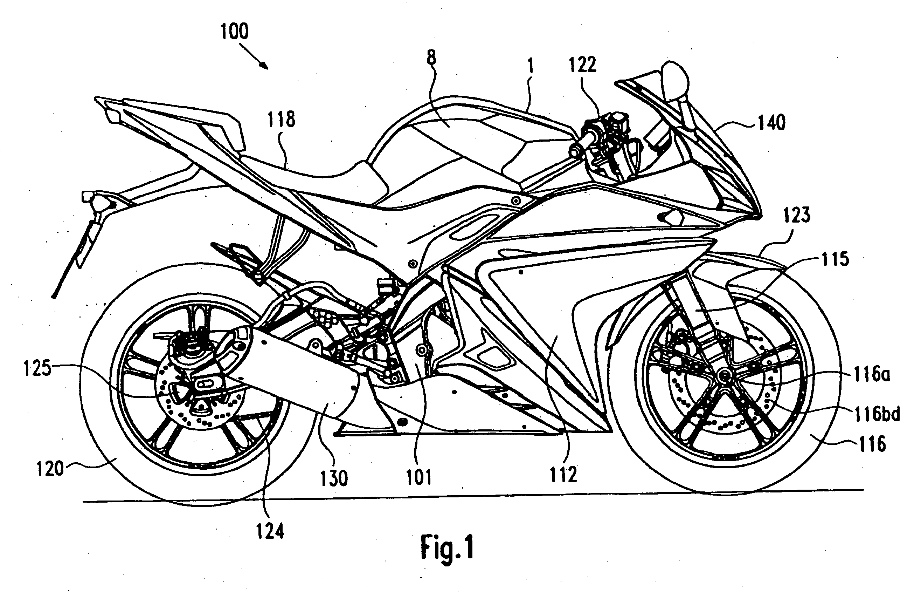

In the following, some details and features of the fuel tank assembly according to the present invention will be described with reference to Figure 1.

In Figure 1, a motorcycle 100 is depicted. Although some portions or component parts common to usual motorcycles have been omitted in Figure 1 for the sake of clarity, the essential features of common motorcycles have been depicted in Figure 1 and relate in particular to a fuel tank assembly 1 comprising a cover or covering element 8 covering or protecting a fuel tank (which has therefore to be understood as being located below said covering element 8). Further side covering elements 112 are mounted to the motorcycle 100 on opposite sides thereof; components of the motorcycle such as, for instance, the crankcase, the cylinder or the like have therefore to be understood as being located in the area defined by said side covering elements, in combination, and therefore as being located behind the right side cover element 112 depicted in Figure 1. A front cowling element 140 is located at the front end portion of the motorcycle 100, with said front cowling element 140 comprising and/or supporting components such as, for instance, headlights, front direction indicators, rear mirrors, speedometer or the like. A front wheel 116 comprising a brake disk 116bd is supported by a front fork 115, with said front wheel 116 being attached to said front fork 115 by means of a front axle 116a.

The motorcycle 100 further comprises a rear wheel 120 with a sprocket 125, a chain 124 being further provided to transmit drive force to the rear wheel 120 through the rear sprocket 125. Still in Figure 1, reference numeral 122 identifies a handlebar provided with brake handles and corresponding cables extending therefrom. Moreover, reference numeral 123 identifies a front fender provided to avoid the motorcycle 100 and the driver and/or passenger being splashed with mud. Reference numeral 130 identifies a silencer belonging to an exhaust gas apparatus extending from the cylinder to the rear of the motorcycle (therefore partially covered in Figure 1 by the sidecover element 112). A seat 118 is further provided, with said seat 118 being placed behind the fuel assembly 1, in particular behind the cover 8 and the fuel tank located below or under said cover 8. Finally, the motorcycle or Figure 1 comprises an injection system generally identified in Figure 1 by reference numeral 101.

As anticipated above some usual component parts and/or features of common motorcycles have not been depicted in Figure 1 for the sake of clarity; the features not depicted may relate for instance to a rear cushion, rear fender, a speed reducer, details of the engine and/or crankcase or even the cylinder, rear direction indicators, or the like. Even if not strictly essential to the present invention, these omitted features and/or their equivalents have to be considered as comprised in the motorcycle as depicted in Figure 1.

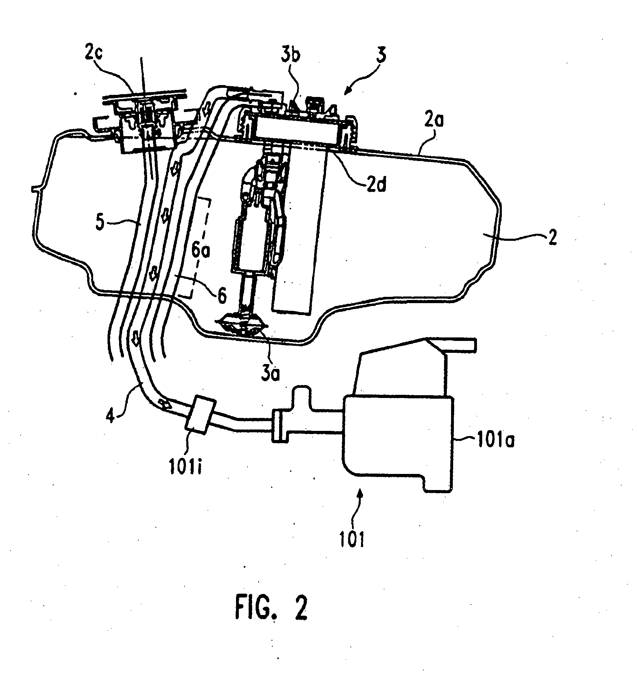

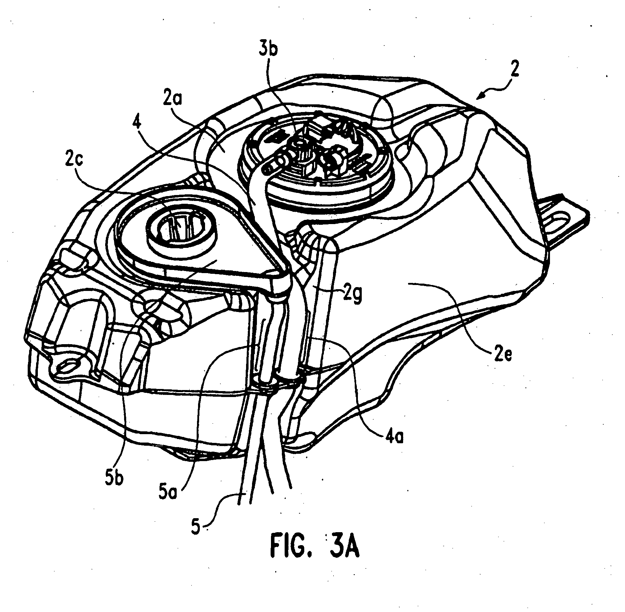

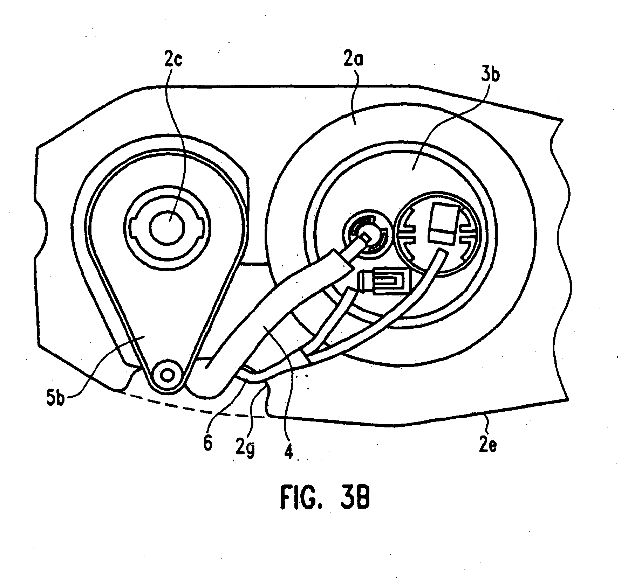

As apparent from Figure 1, the injection system 101 of the motorcycle depicted therein is located in the area below the fuel tank assembly 1, in particular below the fuel tank located below the fuel tank cover 8 and therefore not explicitly depicted in Figure 1. The fuel tank assembly 1 further comprises a fuel pump (not depicted in Figure 1), adapted to collect fuel from the fuel tank and to deliver same to the injection system 101; at least one fuel pipe is also provided, extending from the fuel pump to the injection system 101. The particular location of the fuel pump and the fuel pipe, in particular with respect to the fuel tank, will become more apparent from the following disclosure given with reference to Figures 2, 3A and 3B.

In Figures 2, 3A and 3B, those features which have been already described above with reference to Figure 1 are identified by the same reference numerals.

As apparent from Figures 3A and 2 in combination, the fuel tank assembly 1 according to the embodiment of the present invention depicted therein, comprises a fuel tank 2 adapted to be filled with fuel through an aperture 2c; the aperture 2c is moreover adapted to be closed by means of a cap or plug (not depicted in the drawings), said cap or plug being further adapted to be removed from the aperture 2c any time the need arises to fill the tank 2 with fuel. According to the circumstances and/or exigencies the cap or plug may comprise a screw plug or the like, eventually comprising a locking device with a key. A fuel pump 3 is also provided, adapted to collect fuel from the fuel tank 2 and to deliver the collected fuel to the injection system 101 of the motorcycle 100. To this end, the fuel pump 3 comprises a collecting portion 3a received inside the fuel tank 2 and a delivering portion 3b in fluid connection with said collecting portion 3a; in particular, as apparent from Figures 3A and 2, said delivering portion 3b is mounted to the upper wall 2a of the fuel tank 2. This particular location of the delivering portion 3b of the fuel pump 3 allows to overcome many of the drawbacks affecting the prior art fuel tank assemblies; in fact, mounting the delivering portion 3b to the upper wall 2a of the fuel tank 2 allows to overcome the problems relating to leakage of fuels which arise in those cases in which the delivering portion of the fuel pump is mounted to the bottom wall of the fuel tank. Moreover, since the problems related to leakage of fuel are avoided, a fuel tank made of plastic or equivalent materials, for instance a molded plastic fuel tank, may be used, with evident advantages in terms of overall costs of the fuel tank assembly and therefore of the motorcycle. A fuel pipe 4 extends from the receiving portion 3b of the fuel pump 3 to the injection system 101 (see also Figure 2) so as to establish a fluid connection between said delivering portion 3b of said fuel pump 3 and said injection system 101. According to the circumstances and/or exigencies, said injection system 101 may comprise a fuel injector 101 i and an air filter 101 a (see for example Figure 2); however, it has to be noted that the injection system falls outside the scope of the present invention so that further details relating to said injection system may be avoided. As apparent in particular from Figure 2, at least one electrical cable 6 is also provided for the purpose of supplying electrical power to the fuel pump 3; in particular, as apparent from Figure 2, a first end portion of said electrical cable 6 is connected to the delivering portion 3b of said fuel pump 3 with said electrical cable 6 extending from said delivering portion 3b. Even if not explicitly depicted in the drawings, it can be appreciated that said electrical cable 6 is adapted to be connected through a second end portion opposite to said first end portion to either the battery or to an electrical control unit or the like of the motorcycle. Still with reference to Figure 2 it appears that at least a portion 6a of said electrical cable 6 extends beside the fuel pipe 4; this disposition of the fuel pipe 4 and/or the electrical cable 6 offers further advantages in terms of the overall layout of the motorcycle, as will become more apparent with the following disclosure. The embodiment of the present invention depicted in Figures 2, 3A, and 3B, further comprises an overflow pipe 5 extending from a collecting basin 5b; during use of the motorcycle and in case of fuel overflowing from the fuel tank 2 through the aperture 2c, the overflowing fuel may be collected by the collecting basin 5b and delivered through the overflow pipe 5 to a overflowing system (not depicted in the drawings) from which the overflowing fuel is filled again into the fuel tank 2. As apparent from Figures 2, 3A and 3B, also the overflow pipe 5 or at least a portion 5a thereof extends beside the fuel pipe 4 and the electrical cable 6. As anticipated above, the advantages arising from this particular disposition of the overflow pipe 5, the fuel pipe 4, and the electrical cable 6 will be disclosed in more detail in the following.

It clearly appears from Figures 3A and 3B in combination, that the fuel tank 2 further comprises a side wall 2e extending downward from said upper wall 2a; in particular, said side wall 2e defines a recess 2g wherein at least portions 5a, 4a and 6a of said overflow pipe 5, said fuel pipe 4, and said electrical cable 6, respectively, are received. Said recess 2g extends between said upper wall 2a and a bottom wall of said fuel tank 2 (see in particular Figure 2). According to the embodiment of the fuel tank assembly 1 of the present invention depicted in the drawings, said recess 2g extends from said upper wall 2a to the bottom wall of the fuel tank 2 in a direction substantially vertical; however, it has to be noted that also other solutions are possible according to the circumstances. For instance, depending on the location of the injection system 101 with respect to the fuel tank 2 and/or the delivering portion 3b of the fuel pump 3, the recess 2g may extend at an angle between the upper wall 2a and the bottom wall of the fuel tank 2. The recess 2g further extends from the side wall 2e toward the inside of the fuel tank 2 (toward the top in Figure 3b) for a predefined depth; in particular, according to the embodiment depicted in Figure 3b, the depth of the recess 2g may be selected so as to allow said portions 6a, 5a and 4a of said electrical cable 6, said overflow pipe 5 and said fuel pipe 4 to be received inside said recess 2g so as to not extend beyond the side wall 2e of said fuel tank 2 (see in particular the dashed line in Figure 3b). As will become more apparent from the following disclosure, disposing the electrical cable 6, the fuel pipe 4 and the overflow pipe 5 inside the recess 2g of the sidewall 2e of the fuel tank 2 allows to mount a cover or covering element to the fuel tank 2, with said cover or covering element matching with the external dimensions and shape of the fuel tank 2; that means that no additional space is needed for disposing the fuel pipe 4, the electrical cable 6 and the overflow pipe 5 between the fuel tank 2 and said cover 8.

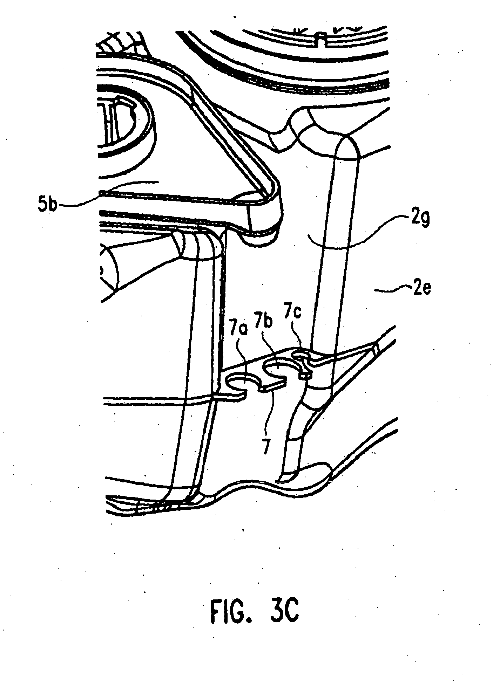

In the following, further details and/or features of the fuel tank assembly according to the present invention will be described with reference to Figure 3C wherein, as usual, features and/or details already described above with reference to previous Figures are identified by the same reference numbers.

Figure 3C relates to particular details of the fuel tank 2 belonging to the fuel tank assembly 1 of the present invention. As apparent from Figure 3C, wherein, for the sake of clarity and convenience, the fuel pipe 4, the overflow pipe 5 and the electrical cable 6 depicted in Figure 2 have been omitted, fixing means are mounted to the fuel tank 2 inside the recess 2g defined by its side wall 2e. In particular, said fixing means comprise a membrane or blade 7, extending in a direction substantially transverse to the direction along which the recess 2g extends. Moreover, said membrane 7 comprises indentations or notches 7a, 7b and 7c, the dimension and shape of which are selected so as to allow the overflow pipe 5, the fuel pipe 4 and the electrical cable 6 to be elastically forced into said indentations 7a, 7b and 7c, respectively. These indentations allow to avoid movement or displacement of the overflow pipe 5, the fuel pipe 4 and the electrical cable 6 during use of the motorcycle, for instance due to vibrations or the like. Moreover, by means of the elastic membrane 7 it may be avoided that the overflow pipe 6, the fuel pipe 4 and the electrical cable 6 come outside of the recess 2g so as to extend beyond the side wall 2e of the fuel tank 2.

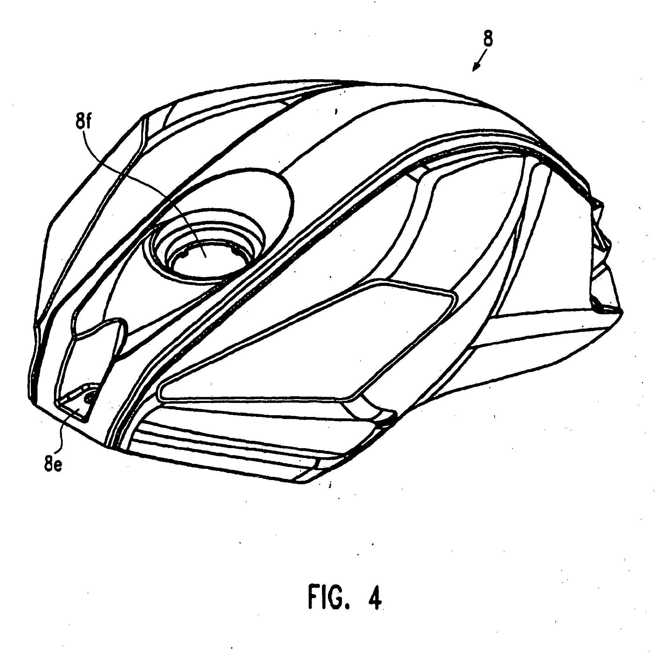

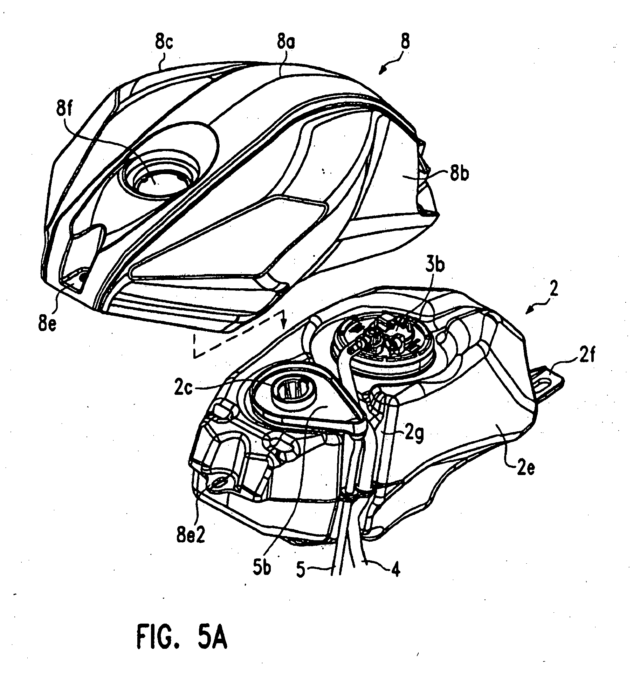

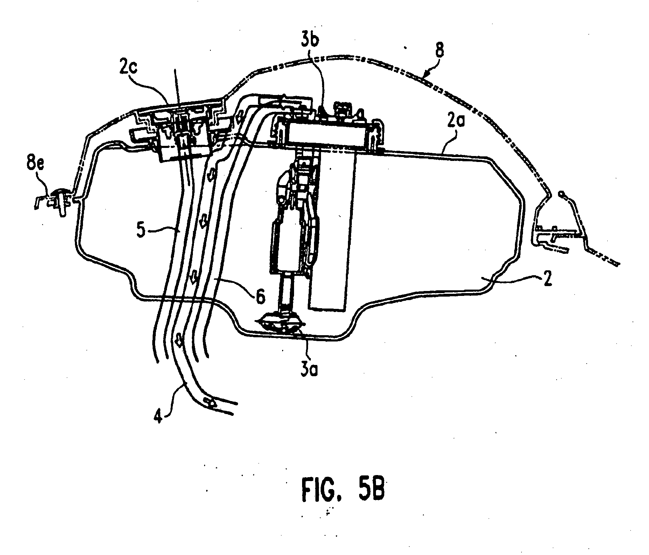

In the following, a further embodiment of the fuel tank assembly according to the present invention will be described with reference to Figures 4, 5A and 5B; again, in Figures 4, 5A and 5B, those features of the fuel tank assembly according to the present invention which have been disclosed above with reference to previous Figures are identified by the same reference numerals.

In Figure 4 a cover or covering element 8 is depicted. As apparent from Figures 5A and 5B, said cover or covering element 8 is adapted to be mounted to the fuel tank 2 so as to cover said fuel tank 2 at least partially. To this end, the cover 8 comprises a trough aperture 8f adapted to be located in correspondence to the aperture 2c of the fuel tank 2, once said cover 8 has been mounted to said fuel tank 2. Moreover, the cover 8 comprises fixing means 8e adapted to cooperate with corresponding fixing means 8e2 of said fuel tank 2 so as to allow said cover 8 to be firmly fixed to said fuel tank 2. For instance, according to the circumstances, the cover 8 may be fixed to the fuel tank 2 by means of screwing means such as, screws, bolts or the like, received into corresponding apertures of the fixing means 8e and 8e2. As apparent from Figures 5A and 5B in combination, the cover element 8 comprises a central portion 8a wherein the trough aperture 8f is provided. As apparent from Figure 5B, said central portion 8a is adapted to cover, once said cover element 8 has been mounted to said fuel tank 2, at least the upper wall 2a of the fuel tank 2 and the delivering portion 3b of the fuel pump 3 mounted to said upper wall 2a of said fuel tank 2. The cover 8 further comprises, as apparent from Figure 5A, a first side portion 8b extending downward from said central portion 8a; it appears clearly from Figure 5A, that said first side portion 8b is adapted to cover at least partially said side wall 2e of said fuel tank 2 once said cover 8 has been mounted to said fuel tank 2. In particular, the side portion 8b of the cover 8 is adapted to cover at least partially the recess 2g defined by the side wall 2e of the fuel tank 2 and at least portions 6a, 5a and 4a of said electrical cable 6, said overflow pipe 5 and said fuel pipe 4, respectively, received inside said recess 2g. The length or extension in the substantially vertical direction of the side portion 8b of the cover 8 may be selected according to the circumstances and/ exigencies; for instance, it may be provided that the side portion 8b of the cover 8 extends to a length such that the recess 2g defined by the lateral wall 2e and the fuel pipe 4, the overflow pipe 5 and the electrical cable 6 or portions thereof received inside said recess 2g are substantially completely covered by said side portion 8b once said cover 8 has been mounted to said fuel tank 2.

It appears moreover from Figure 5A that the cover 8 comprises a second side portion 8c extending downward from said central portion 8a and being located opposite said first side portion 8b; similarly to the case of the side portion 8b, the length or extension of the side portion 8c downward from said central portion 8a may be selected according to the circumstances and/or exigencies. Finally, it appears from Figures 5A and 5B that the fuel tank 2 comprises fixing means 2f adapted to firmly fix said fuel tank 2 to the motorcycle 1, for instance to the chassis or main frame thereof. To this end, screwing means such as screws, bolts or the like may be used, with said screwing means being received into an aperture of said fixing means 2f.

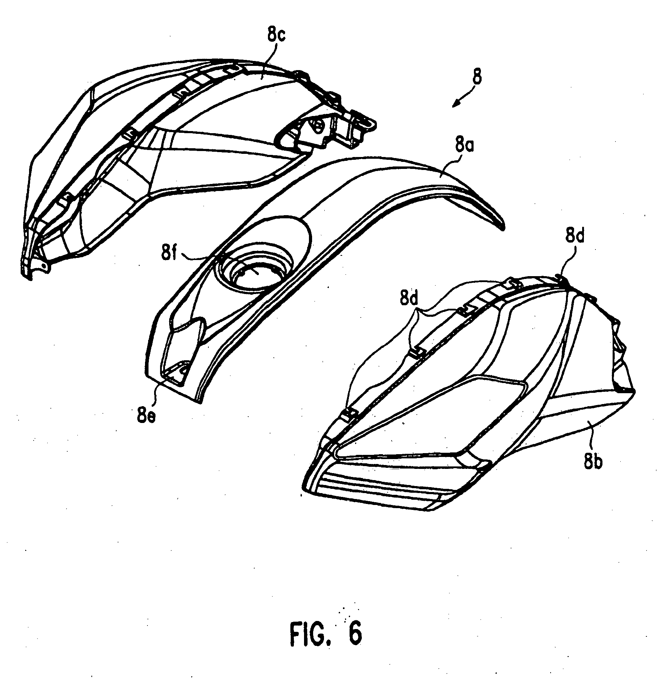

In the following, with reference to Figure 6, further details of the cover 8 adapted to be implemented in a further embodiment of the fuel tank assembly according to the present invention will be described; as usual, in Figure 6, those features which have been already disclosed and/or described above with reference to previous Figures are identified by the same reference numerals.

As apparent from Figure 6, the side portions 8b and 8c of the cover element depicted therein are adapted to be alternatively fixed to and removed from said central portion 8a; to this end, connecting means 8d are provided on the edges of said side portions 8d and 8c facing said central portion 8a, as well as on the opposite edges of said central portion 8a facing said side portions 8b and 8c, respectively. The number and kind of said connecting means may be selected according to the circumstances; for instance, clips or the like may be provided. The solution depicted in Figure 6 allows to simplify and speed up both the assembly and maintenance operation. For instance, when the need arises to gain access to the delivering portion 3b of the fuel pump, only the central portion 8a of the cover 8 may be removed. In the same way, when the need arises to gain access to one or more of the fuel pipe 4, the overflow pipe 5 and the electrical cable 6 received inside the recess 2g defined by the side wall 2e of the fuel tank 2, only the side portion 8b of the cover 8 may be removed without any need to remove one of the central portion 8a and the side portion 8c.

It arises therefore from the above disclosure that the fuel tank assembly according to the present invention allows the drawbacks affecting the prior art fuel tank assemblies to be overcome or at least reduced or minimized. In particular, it has been demonstrated with the above disclosure that the fuel tank assembly according to the present invention offers evident advantages in terms of functionality and design. It has in fact been demonstrated that the particular location of the fuel pump, in particular of the delivering portion thereof on the upper portion or wall of the fuel tank allows using tanks of plastic or equivalent materials without any risk of fuel leakages being run. Moreover, disposing the fuel pump or at least the delivering portion thereof on the upper portion or wall of the fuel tank allows to simplify and speed up the assembly and/or maintenance operations with corresponding evident advantages in terms of reduced assembly and maintenance costs. Further advantages offered by the fuel tank assembly according to the present invention are due to the particular location and disposition of one or more of the fuel pipe extending from the fuel pump, the overflow pipe and the electrical cable provided for supplying electrical power to the fuel pump. In fact, locating or even fixing one of said pipes or cable inside a recess defined by a lateral wall or portion of the fuel tank allows to keep the overall dimension of the fuel tank assembly as reduced as needed, with evident corresponding advantages in terms of the overall look or appearance of the motorcycle implementing said fuel tank assembly. Moreover, problems relating to the undesired displacement or movement of one of said pipes or cables during use of the motorcycle are also avoided. Finally, the assembly and maintenance operations may also be simplified and sped up by providing a cover for the fuel tank, with said cover comprising detachable portions such as a central portion and two opposite side portions extending from said central portion.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

For instance, it will appear clear to those skilled in the art that fuel tanks of different shapes and dimensions may be implemented and used in the fuel tank assembly according to the present invention. As an example, fuel tanks having a substantially rounded shape or at least a substantially rounded upper portion or wall may also be implemented in the fuel tank assembly of the present invention according to the circumstances and/or exigencies and without departing from the scope of the present invention.

Further unclaimed embodiments may include the following features:

A further embodiment relates to a fuel tank assembly 1 for a motorcycle 100, said assembly comprising a fuel tank 2 with an upper wall 2a, said fuel tank assembly 1 further comprising a fuel pump 3 with a collecting portion 3a adapted to collect fuel from said fuel tank 2) and a delivering portion 3b) adapted to deliver fuel to the injection system 101 of said motorcycle 100; wherein said delivering portion 3b of said fuel pump 3 is placed on the upper wall 2a of said fuel tank 2.

A further embodiment relates to an assembly, wherein said fuel tank 2 further comprises a fuel inlet aperture 2c adapted to allow said fuel tank 2 to be filled with fuel; said delivering portion 3b of said fuel pump 3 being placed behind said fuel inlet aperture 2c when viewed from a driver or passenger seating on said motorcycle.

A further embodiment relates to an assembly as wherein said collecting portion 3a of said fuel pump 3 is received inside said fuel tank 2, and wherein said delivering portion 3b of said fuel pump 3 is placed on an aperture 2d of said upper wall 2a of said fuel tank 2.

A further embodiment relates to an assembly wherein said delivering portion 3b of said fuel pump 3 is screwed on said aperture 2d of said upper wall 2a of said fuel tank 2.

A further embodiment relates to an assembly wherein said fuel tank 2 is of a plastic material.

A further embodiment relates to an assembly wherein said fuel tank 2 is a molded tank.

A further embodiment relates to an assembly wherein said fuel tank 2 further comprises at least one side wall 2e extending downwardly from said upper wall 2a, and wherein said at least one side wall 2e defines a recess 2g extending from said side wall 2e toward the inside of said fuel tank 2, said assembly further comprising at least one fuel pipe 4 extending from said delivering portion 3b of said fuel pump 3, at least a portion 4a of said fuel pipe 4 being received in said recess 2g.

A further embodiment relates to an assembly wherein said recess 2g is defined by a curved portion of said side wall 2e.

A further embodiment relates to an assembly wherein said assembly further comprises at least one over flow pipe 5 adapted to collect fuel exiting from said fuel inlet aperture 2c, at least a portion 5a of said over flow pipe being received in said recess 2g

A further embodiment relates to an assembly wherein said assembly further comprises at least one electrical cable 6 adapted to supply electrical power to said fuel pump 3, at least a portion 6a of said electrical cable 6 being received in said recess 2g.

A further embodiment relates to an assembly wherein said fuel tank 2 further comprises a bottom wall, said recess 2g extending from said upper wall 2a to said bottom wall.

A further embodiment relates to an assembly wherein said recess 2g extends from said upper wall 2a to said bottom wall in a direction substantially vertical.

A further embodiment relates to an assembly wherein said at least one portion 4a of said fuel pipe 4, said at least one portion 5a of said over flow pipe 5 and said at least one portion 6a of said electrical cable 6 received in said recess 2g also extend in a direction substantially vertical.

A further embodiment relates to an assembly wherein said recess 2g extends from said side wall 2e toward the inside of said fuel tank 2 for a predefined depth, and wherein said at least one portion 4a of said fuel pipe 4, said at least one portion 5a of said over flow pipe 5 and said at least one portion 6a of said electrical cable 6 are received inside said predefined depth so as to not extend beyond said side wall 2e of said fuel tank 2.

A further embodiment relates to an assembly wherein said assembly further comprises fixing means 7 received in said recess and adapted to firmly fix at least one of said at least one portion 4a of said fuel pipe 4, said at least one portion 5a of said over flow pipe 5 and said at least one portion 6a of said electrical cable 6 in said recess 2g.

A further embodiment relates to an assembly wherein said fixing means 7 comprise a membrane of an elastic material with at least one indentation or notch 7a into which at least one of said at least one portion 4a of said fuel pipe 4, said at least one portion 5a of said over flow pipe 5 and said at least one portion 6a of said electrical cable 6 may be forced so as to be firmly fixed in said recess 2g.

A further embodiment relates to an assembly wherein said fixing means comprise at least one clip 7b adapted to firmly fix one of said at least one portion 4a of said fuel pipe 4, said at least one portion 5a of said over flow pipe 5 and said at least one portion 6a of said electrical cable 6 in said recess 2g.

A further embodiment relates to an assembly wherein said recess 2g is disposed between said delivering portion 3b of said fuel pump 3 and said inlet aperture 2c of said fuel tank 2.

A further embodiment relates to an assembly wherein said assembly further comprises a cover 8 adapted to at least partially cover said fuel tank 2.

A further embodiment relates to an assembly wherein said cover 8 comprises a central portion 8a adapted to at least partially cover said upper wall 2a of said fuel tank 2.

A further embodiment relates to an assembly wherein said central portion 8a of said cover 8 is adapted to cover at least said delivering portion 3b of said fuel pump 3.

A further embodiment relates to an assembly wherein saidcentral portion 8a of said cover 8 is adapted to cover at least said delivering portion 3b and said inlet aperture 2c of said fuel pump 3.

A further embodiment relates to an assembly wherein said first side portion 8b of said cover 8 is positioned close to said fuel pipe 4 received in said recess 2g.

A further embodiment relates to an assembly wherein said central portion 8a of said cover 8 is adapted to be fixed to said fuel tank 2 through fixing means 8e.

A further embodiment relates to an assembly wherein said fixing means comprise screws or the like.

A further embodiment relates to a motorcycle 100 wherein said recess 2g of said fuel tank assembly 1 is disposed forwardly with respect to the injection system 101 of said motorcycle 100.

## Claims

1. A motorcycle (100) having a fuel tank assembly (1), said assembly comprising a fuel tank (2) with an upper wall (2a), defining a fuel inlet aperture (2c) adapted to allow said fuel tank (2) to be filled with fuel; said fuel tank assembly (1) further comprising a fuel tank cover (8), arranged to cover said fuel tank (2) and including a through aperture (8f) located in correspondence to said fuel inlet aperture (2c),
said cover (8) comprising a central portion (8a) covering said upper wall (2a) of said fuel tank (2), said central portion (8a) comprising said through aperture (8f) along with a first side portion (8b) covering at least partially said fuel tank (2) from one side, and a second side portion (8c) covering at least partially said fuel tank from the opposite side,
wherein said central portion (8a) is fixed to said fuel tank (2) through fixing means (8e), said first side portion (8b) and said second side portion (8c) of said cover (8) are detachably connected to said central portion (8a) of said cover (8) through connecting means (8d),
said fuel tank (2) further comprises first and second side walls (2e) extending downwardly from said upper wall (2a) on opposite sides thereof, and
said first and second side portions (8b, 8c) cover at least partially said first and second side walls (2e), respectively,
**characterized in that**
said central portion (8a) of said cover (8) extends over said fuel tank (2) by a length greater than the length of said fuel tank (2); and
front ends of the first and second side portions (8b, 8c) are positioned between the fuel tank (2) and a front fork (115) of the motorcycle (100) in a front-rear direction of the motorcycle (100).

2. A motorcycle (100) as claimed in claim 1, **characterized in that** said connecting means comprise a plurality of clips.

3. A motorcycle (100) as claimed in claim 1 or 2, **characterized in that** said fixing means comprise screws or the like.

4. A motorcycle (100) as claimed in one of claims 1 to 3, **characterized in that** said fuel tank (2) comprises a left side wall and a right side wall extending downwardly from said upper wall (2a) on left and right sides thereof, respectively, and **in that** said first and second side portions (8b), (8c) cover at least partially said left and right side walls, respectively.

5. A motorcycle (100) as claimed in one of claims 1 to 4, **characterized in that** said fuel tank (2) is of a plastic material.

6. A motorcycle (100) as claimed in claim 5, **characterized in that** said fuel tank (2) is a molded tank.

7. A motorcycle (100) as claimed in one of claims 1 to 6, **characterized in that** said first and second side portions (8b, 8c) spread out sideways from opposite edges of said central portion (8a) respectively, and then extend downward.

8. A motorcycle as claimed in one of claims 1 to 7, **characterized in that** said motorcycle is a two wheeled motorcycle.

9. A motorcycle as claimed in one of claims 1 to 7, **characterized in that** said motorcycle is a three wheeled motorcycle.

## Patentansprüche

1. Motorrad (100) mit einer Kraftstofftankanordnung (1), wobei die Anordnung einen Kraftstofftank (2) mit einer oberen Wand (2a) umfasst, die eine Kraftstoffeinlassöffnung (2c) definiert, die so eingerichtet ist, dass sie das Füllen des Kraftstofftanks (2) mit Kraftstoff zulässt, wobei die Kraftstofftankanordnung (1) des Weiteren eine Kraftstofftankabdeckung (8) umfasst, die angeordnet ist, um den Kraftstofftank (2) abzudecken, und eine Durchgangsöffnung (8f) enthält, die in Entsprechung zu der Kraftstoffeinlassöffnung (2c) angeordnet ist,
wobei die Abdeckung (8) einen Mittelabschnitt (8a) umfasst, der die obere Wand (2a) des Kraftstofftanks (2) abdeckt, wobei der Mittelabschnitt (8a) die Durchgangsöffnung (8f) sowie einen ersten Seitenabschnitt (8b), der den Kraftstofftank (2) von einer Seite wenigstens teilweise abdeckt, und einen zweiten Seitenabschnitt (8c), der den Kraftstofftank von der gegenüberliegenden Seite wenigstens teilweise abdeckt, umfasst,
wobei der Mittelabschnitt (8a) an dem Kraftstofftank (2) über Befestigungseinrichtungen (8e) befestigt ist,
wobei der erste Seitenabschnitt (8b) und der zweite Seitenabschnitt (8c) der Abdeckung (8) abnehmbar mit dem Mittelabschnitt (8a) der Abdeckung (8) über Verbindungseinrichtungen (8d) verbunden sind,
wobei der Kraftstofftank (2) des Weiteren erste und zweite Seitenwände (2e) umfasst, die sich von der oberen Wand (2a) auf gegenüberliegenden Seiten derselben nach unten erstrecken, und
die ersten und zweiten Seitenabschnitte (8b, 8c) die ersten und zweiten Seitenwände (2e) jeweils wenigstens teilweise abdecken,
**dadurch gekennzeichnet, dass**
sich der Mittelabschnitt (8a) der Abdeckung (8) über den Kraftstofftank (2) mit einer Länge erstreckt, die größer als die Länge des Kraftstofftanks (2) ist, und vordere Enden der ersten und zweiten Seitenabschnitte (8b, 8c) zwischen dem Kraftstofftank (2) und einer vorderen Gabel (115) des Motorrads (100) in einer Vorne-Hinten-Richtung des Motorrads (100) angeordnet sind.

2. Motorrad (100) nach Anspruch 1, **dadurch gekennzeichnet, dass** die Verbindungseinrichtungen eine Vielzahl von Klemmen umfassen.

3. Motorrad (100) nach Anspruch 1 oder 2, **dadurch gekennzeichnet, dass** die Befestigungseinrichtungen Schrauben oder dergleichen umfassen.

4. Motorrad (100) nach einem der Ansprüche 1 bis 3, **dadurch gekennzeichnet, dass** der Kraftstofftank (2) eine linke Seitenwand und eine rechte Seitenwand umfasst, die sich von der oberen Wand (2a) jeweils auf linken und rechten Seiten derselben nach unten erstrecken, und dass die ersten und zweiten Seitenabschnitte (8b, 8c) die linken und rechten Seitenwände jeweils wenigstens teilweise abdecken.

5. Motorrad (100) nach einem der Ansprüche 1 bis 4, **dadurch gekennzeichnet, dass** der Kraftstofftank (2) aus einem Kunststoffmaterial besteht.

6. Motorrad (100) nach Anspruch 5, **dadurch gekennzeichnet, dass** der Kraftstofftank (2) ein geformter Tank ist.

7. Motorrad (100) nach einem der Ansprüche 1 bis 6, **dadurch gekennzeichnet, dass** sich die ersten und zweiten Seitenabschnitte (8b, 8c) von gegenüberliegenden Rändern des Mittelabschnitts (8a) jeweils zur Seite und dann nach unten erstrecken.

8. Motorrad nach einem der Ansprüche 1 bis 7, **dadurch gekennzeichnet, dass** das Motorrad ein zweirädriges Motorrad ist.

9. Motorrad nach einem der Ansprüche 1 bis 7, **dadurch gekennzeichnet, dass** das Motorrad ein dreirädriges Motorrad ist.

## Revendications

1. Motocyclette (100) comportant un ensemble de réservoir de carburant (1) ledit ensemble comprenant un réservoir de carburant (2) avec une paroi supérieure (2a) définissant une ouverture d'entrée de carburant (2c) adaptée à permettre le remplissage dudit réservoir de carburant (2) avec du carburant ; ledit ensemble de réservoir de carburant (1) comprenant en outre un recouvrement de réservoir de carburant (8), agencé pour recouvrir ledit réservoir de carburant (2) et incluant une ouverture de traversée (8f) disposée en correspondance avec ladite ouverture d'entrée de carburant (2c),
ledit recouvrement (8) comprenant une partie centrale (8a) recouvrant ladite paroi supérieure (2a) dudit réservoir de carburant (2), ladite partie centrale (8a) comprenant ladite ouverture de traversée (8f) ainsi qu'une première partie latérale (8b) recouvrant au moins partiellement ledit réservoir de carburant (2) depuis un côté, et une seconde partie latérale (8c) recouvrant au moins partiellement ledit réservoir de carburant depuis le côté opposé,
dans laquelle ladite partie centrale (8a) est fixée audit réservoir de carburant (2) par l'intermédiaire de moyens de fixation (8e),
ladite première partie latérale (8b) et ladite seconde partie latérale (8c) dudit recouvrement (8) sont raccordées de manière amovible à ladite partie centrale (8a) dudit recouvrement (8) par l'intermédiaire de moyens de raccordement (8d),
ledit réservoir de carburant (2) comprend en outre des première et seconde parois latérales (2e) s'étendant vers le bas depuis ladite paroi supérieure (2a) sur ses côtés opposés, et
lesdites première et seconde parties latérales (8b, 8c) recouvrent respectivement au moins partiellement lesdites première et seconde parois latérales (2e),
**caractérisée en ce que**
ladite partie centrale (8a) dudit recouvrement (8) s'étend au-dessus dudit réservoir de carburant (2) sur une longueur supérieure à la longueur dudit réservoir de carburant (2) ; et
les extrémités avant des première et seconde parties latérales (8b, 8c) sont positionnées entre le réservoir de carburant (2) et la fourche avant (115) de la motocyclette (100) dans la direction avant-arrière de la motocyclette (100).

2. Motocyclette (100) selon la revendication 1, **caractérisée en ce que** lesdits moyens de raccordement comprennent une pluralité d'attaches.

3. Motocyclette (100) selon la revendication 1 ou 2, **caractérisée en ce que** lesdits moyens de fixation comprennent des vis ou analogue.

4. Motocyclette (100) selon l'une des revendications 1 à 3, **caractérisée en ce que** ledit réservoir de carburant (2) comprend une paroi latérale gauche et une paroi latérale droite s'étendant respectivement vers le bas depuis ladite paroi supérieure (2a) sur ses côtés gauche et droit et **en ce que** lesdites première et seconde parties latérales (8b), (8c) recouvrent au moins partiellement respectivement lesdites parois latérales gauche et droite.

5. Motocyclette (100) selon l'une des revendications 1 à 4, **caractérisée en ce que** ledit réservoir de carburant (2) est en matière plastique.

6. Motocyclette (100) selon la revendication 5, **caractérisée en ce que** ledit réservoir de carburant (2) est un réservoir moulé.

7. Motocyclette (100) selon l'une des revendications 1 à 6, **caractérisée en ce que** lesdites première et seconde parties latérales (8b, 8c) s'étalent respectivement sur le côté depuis les bords opposés de ladite partie centrale (8a) puis s'étendent vers le bas.

8. Motocyclette selon l'une des revendications 1 à 7, **caractérisée en ce que** ladite motocyclette est une motocyclette à deux roues.

9. Motocyclette selon l'une des revendications 1 à 7, **caractérisée en ce que** ladite motocyclette est une motocyclette à trois roues.
